# EUROPEAN PATENT SPECIFICATION

(11) **EP 4 063 927 B1**
(45) Date of publication and mention of the grant of the patent: **21.06.2023**
(21) Application number: 21173747.3
(22) Date of filing: 13.05.2021
(51) Int. Cl.: G02B 6/38, G02B 6/52

(54) **AN OPTICAL CONNECTOR COMPRISING A FRAME SLEEVE AND A FERRULE ASSEMBLY FIXED IN THE FRAME SLEEVE**
OPTISCHER VERBINDER MIT EINER RAHMENHÜLSE UND EINER IN DER RAHMENHÜLSE BEFESTIGTEN HÜLSENANORDNUNG
UN CONNECTEUR OPTIQUE COMPRENANT UN MANCHON DE CADRE ET UN ENSEMBLE DE FERRULE FIXÉ DANS LE MANCHON DE CADRE

(30) Priority: 23.03.2021 CN 202110306179
(43) Date of publication of application: 28.09.2022
(73) Proprietor: Huizhou Fibercan Industrial Co., LTD, 516122 Huizhou (CN)
(72) Inventor: Li, Yaole, Huizhou, 516122 (CN)
(74) Representative: Zaboliene, Reda

(56) References cited:
- US-A1- 2009 136 184
- US-A1- 2020 225 423
- US-B1- 7 712 970

## Description

### TECHNICAL FIELD

The present invention relates to the field of optical fiber technology, and more particularly, to a blowing type connector.

### BACKGROUND

In the prior art, a housing of a connector is assembled and fixed in two parts, and basically the two parts are fixed to each other to make the connector as a whole. For example, for an optical fiber connector proposed in Patent No. CN103576246B, in which a first housing and a second housing are directly fixed to each other through the slot structure on the opposite sides in a nested manner. Such an assembling and fixing manner is prone to a problem that when the first housing is loosened, the second housing will also loosen, which causes a poor degree of firmness and stability of an assembled product. And most optical fibers are manually inserted through wedge clamps when installed in optical fiber connectors, which is easy to cause pollution to the optical fibers. Another relevant examples of connectors have been described in US 2020/225423 A1, US 2009/136184 A1, and US 7 712 970 B1.

### SUMMARY

In view of the technical drawbacks of the prior art, the present invention as defined by claim 1 provides a connector which solves the above technical problems and satisfies actual needs.

As a further technical solution of the present invention, an outer contour of the clamping member is provided with a disassembly groove. The disassembly groove is arranged parallel to the fixing plane. The disassembly groove is located between the fixing plane and the U-shaped arc surface.

As a further technical solution of the present invention, the central part of the clamping member is provided with a first mounting hole extending through the clamping member. The fastening slots and the fastening members are parallel to each other and are respectively provided at each side edge of the first mounting hole.

As a further technical solution of the present invention, one end of the front frame sleeve is provided with a pair of bayonets arranged oppositely and adapted to the fasteners. Surfaces of the same side of the front frame sleeve and the bayonets are provided with limiting blocks. A pair of the limiting blocks is flush with the end of the front frame sleeve.

As a further technical solution of the present invention, the outer side of the ferrule is sleeved with a dust cap, the first mounting hole is internally provided with a tail sleeve. One end of the clamping member is sleeved with the outer side of the tail sleeve with a same stepped outer sleeve. The outer contour of the clamping member on the right side of the fixing plane is matched with the inner contour of the outer sleeve.

As a further solution of the present invention, the tail handle is divided into a tail handle head portion and a tail handle tail portion. The tail handle tail portion is sleeved with one end of a spring, and the other end of the spring is located in the first mounting hole.

As a further technical solution of the present invention, the tail handle head portion is connected to the ferrule, and the central part of the front frame sleeve is provided with a second mounting hole matching the ferrule, the tail handle head portion and the outer contour of the left end of the clamping member.

As a further technical solution of the present invention, ends of the tail handle tail portion and the tail sleeve are connected by compressing the spring.

The beneficial effects of the present invention are as follows.
(1) The clamping member is fastened by mutually fastening the fastening slots and the fastening members on the first clamping member and the second clamping member, so that the clamping member is integrated, and the tail sleeve provided in the first mounting hole can be fixed. Therefore, when assembling the ferrule assembly, the present invention will result in a use of fewer accessories, easier assembly, and stronger and more stable assembly of parts, and the optical fiber can be installed by blowing to reduce the pollution to the optical fiber in the assembly process.
(2) In specific use of the present invention, the fasteners on the first clamping member and the second clamping member are sleeved on the bayonets on the front frame sleeve outside the clamping member, so that the front frame sleeve and the clamping member are mutually fixed. The U-shaped snap ring and hooks on the rear frame sleeve are respectively clamped on the U-shaped arc surface and the fixing plane on the clamping member. The limiting blocks on the front frame sleeve play a role in limiting the position of the rear frame sleeve, so that the rear frame sleeve is sleeved and fixed on the clamping member, which improves a degree of fastening of the fixing assembly. Compared with an existing frame sleeve fixing method, the front and rear frame sleeves of the present invention are fixed by the clamping member, so that fixing assembly points are dispersed, and each point can also cooperate with each other, which improve firmness and stability of the assembly.

### BRIEF DESCRIPTION OF THE DRAWINGS

FIG. 1 is a structural schematic diagram of the present invention.
FIG. 2 is an exploded view of the present invention.
FIG. 3 is a structural schematic diagram of a clamping member 203.
FIG. 4 is a structural schematic diagram of components of a clamping member 203.
FIG. 5 is a structural schematic diagram of a tail handle 202.
FIG. 6 is a structural schematic diagram of a front frame sleeve 101.
FIG. 7 is a structural schematic diagram of a rear frame sleeve 102.

Of which: frame sleeve 1, front frame sleeve 101, rear frame sleeve 102, ferrule assembly 2, ferrule 201, tail handle 202, clamping member 203, first clamping member 2031, second clamping member 2032, fastening slot 3, fastening member 4, fastener 5, U-shaped arc surface 6, fixing plane 7, disassembly groove 8, first mounting hole 9, bayonet 10, limiting block 11, U-shaped snap ring 12, hook 13, dust cap 14, tail sleeve 15, outer sleeve 16, tail handle head portion 17, tail handle tail portion 18, spring 19, second mounting hole 20.

### DETAILED DESCRIPTION

Embodiments of the present invention will now be described with reference to drawings. It is noted that following related embodiments are merely preferred for the purpose of better illustrating the present invention itself, and that the embodiments of the present invention are not limited to the following embodiments. The present invention relates to relevant and essential components of the art, which should be considered as well known to those skilled in the art and will be understood and appreciated by those skilled in the art.

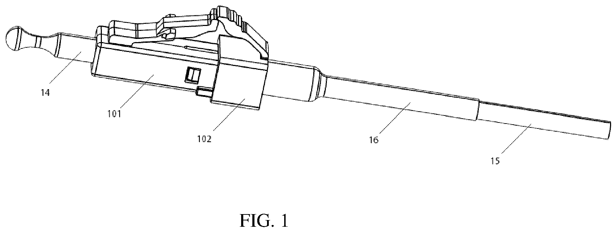

Referring to FIGs. 1 to 7, as an embodiment of the present invention, a blowing type connector is introduced, which includes a frame sleeve 1 and a ferrule assembly 2 fixed in the frame sleeve 1. The frame sleeve 1 includes a front frame sleeve 101 and a rear frame sleeve 102 connected with an end of the front frame sleeve 101. The ferrule assembly 2 includes a ferrule 201, a tail handle 202 and a clamping member 203. One end of the tail handle 202 is connected with a tail sleeve 15, the ferrule 201 and the tail sleeve 15 are both provided with optical fiber through holes, and optical fibers are arranged in the optical fiber through holes through the tail sleeve 15, the tail handle 202 and the ferrule 201 by blowing. Two ends of the tail handle 202 are respectively connected to the ferrule 201 and the clamping member 203. The clamping member 203 is formed by mutually fastening a first clamping member 2031 and a second clamping member 2032. A pair of fastening slots 3 and a pair of fastening members 4 are both provided on the mutually fastening surfaces of the first clamping member 2031 and the second clamping member 2032. Both a side of the first clamping member 2031 and a side of the second clamping member 2032 are provided with fasteners 5. The middle section of the clamping member 203 is provided with a U-shaped arc surface 6 and a fixing plane 7.

The the frame sleeve 1 is divided into the front frame sleeve 101 and the rear frame sleeve 102. The end of the front frame sleeve 101 and an end of the rear frame sleeve 102 are in contact with each other. Optical fibers are provided in the ferrule assembly 2 by air blown. The ferrule 201, the tail handle 202, and the clamping member 203 in the ferrule assembly 2 are clamped and fixed in the rear frame sleeve 102. The clamping member 203 is formed by two parts, namely, the first clamping member 2031 and the second clamping member 2032. A pair of fastening slots 3 and a pair of fastening members 4 are both provided on two mutually fastening surfaces of the first clamping member 2031 and the second clamping member 2032. The pair of fastening members 4 in the first clamping member 2031 are inserted into the pair of fastening slots 3 in the second clamping member 2032. The fastening members 4 in the second clamping member 2032 are inserted into the pair of fastening slots 3 in the first clamping member 2031. Thus, the first clamping member 2031 and the second clamping member 2032 are combined into the complete clamping member 203. The U-shaped arc surface 6 and the fixing plane 7 on the outer contour of the clamping member 203 are used to fix the rear frame sleeve 102 and the clamping member 203 to each other. The optical fiber passes through the tail sleeve 15, the tail handle 202 and the ferrule 201 in turn by blowing, and is inserted into the optical fiber through hole. So the inner diameter of the optical fiber through hole is smaller. Thus, the installation by blowing is not only fast, but also greatly reduces the pollution to the optical fiber during the assembly process.

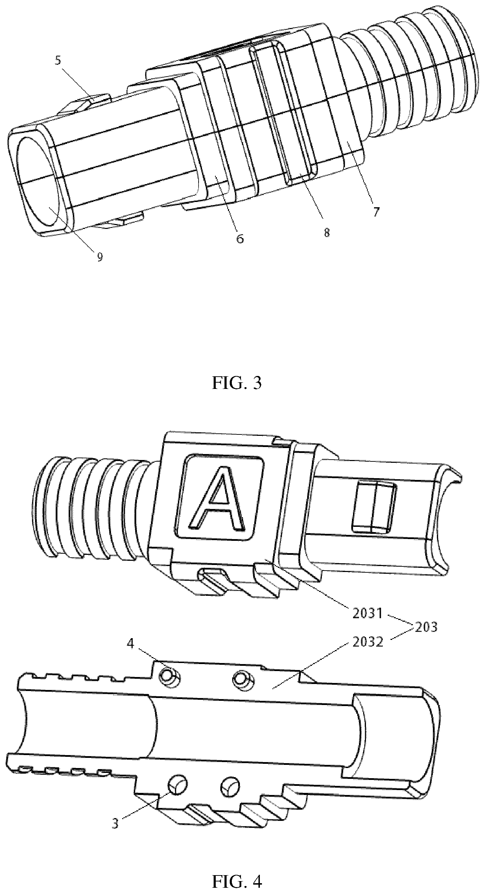

Referring to FIG. 3 and FIG. 4, as a preferred embodiment of the present invention, the outer contour of the clamping member 203 is provided with a disassembly groove 8. The disassembly groove 8 is arranged parallel to the fixing plane 7. The disassembly groove 8 is located between the fixing plane 7 and the U-shaped arc surface 6. The fastening slots 3 on the first clamping member 2031 are mutually matched with the fastening members 4 on the second clamping member 2032, and the fastening members 4 on the first clamping member 2031 are mutually matched with the fastening slots 3 on the second clamping member 2032. When the rear frame sleeve 102 is disassembled and separated from the clamping member 203, use fingers to press the disassembly groove 8 between the U-shaped arc surface 6 and the fixing plane 7 to prevent the hand sliding and facilitate the disassembly of the connector. The fastening slots 3 and the fastener members 4 in the first clamping member 2031 and the second clamping member 2032 can be matched with each other for assembling the clamping member 203, so that the first clamping member 2031 and the second clamping member 2032 are connected as a whole, and a tail sleeve 15 can also be fixed and mounted.

Referring to FIG. 3 and FIG. 4, as a preferred embodiment of the present invention, the central part of the clamping member 203 is provided with a first mounting hole 9 extending through the clamping member 203. The fastening slots 3 and the fastening members 4 are parallel to each other and are respectively provided at each side edge of the first mounting hole 9. Thus, the clamping member 203 can be assembled more firmly, and the tail sleeve 15 can be fixed more firmly. The first mounting hole 9 in the central part of the clamping member 203 is used for fixing and mounting the tail sleeve 15, so that the tail sleeve 15 can be assembled more conveniently.

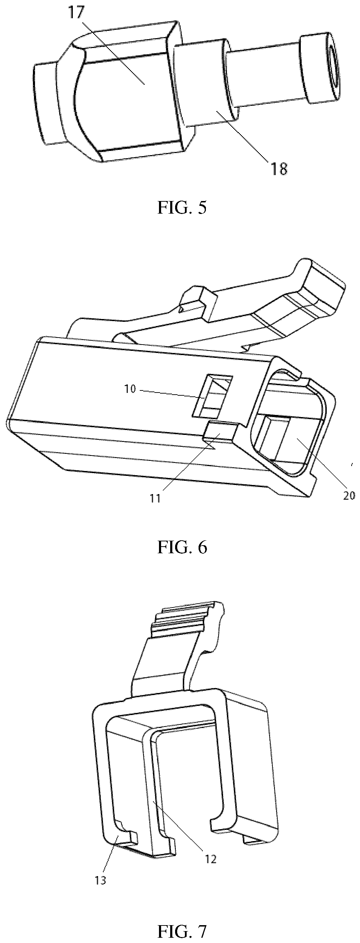

Referring to FIG. 6, as a preferred embodiment of the present invention, one end of the front frame sleeve 101 is provided with a pair of bayonets 10 arranged oppositely and adapted to the fasteners 5. Surfaces of the same side of the front frame sleeve 101 and the bayonets 10 are provided with limiting blocks 11. A pair of limiting blocks 11 is flush with the end of the front frame sleeve 101. When the front frame sleeve 101 is sleeved outside the clamping member 203, the fasteners 5 on the clamping member 203 will be clamped into the bayonets 10 on the front frame sleeve 101 to realize a mutual fixing of the front frame sleeve 101 and the clamping member 203. When the rear frame sleeve 102 and the front frame sleeve 101 are clamped to the clamping member 203, the limiting blocks 11 on the front frame sleeve 101 can strengthen a restriction of a movement of the rear frame sleeve 102. The rear frame sleeve 102 in turn restricts the position of the front frame sleeve 101, and acts as a mutual restriction.

Referring to FIG. 3 and FIG. 7, according to the present invention, one end of the inner side of the rear frame sleeve 102 is provided with a U-shaped snap ring 12, and the other end is provided with a pair of oppositely arranged hooks 13. In an embodiment the inner cavity contour of the rear frame sleeve 102 is matched with the outer contour of the middle section of the clamping member 203. The rear frame sleeve 102 is sleeved on the middle section of the clamping member 203. The U-shaped snap ring 12 and the hooks 13 on the rear frame sleeve 102 are respectively clamped on the U-shaped arc surface 6 and the fixing plane 7 on the clamping member 203, so that the rear frame sleeve 102 is sleeved on the outside of the clamping member 203.

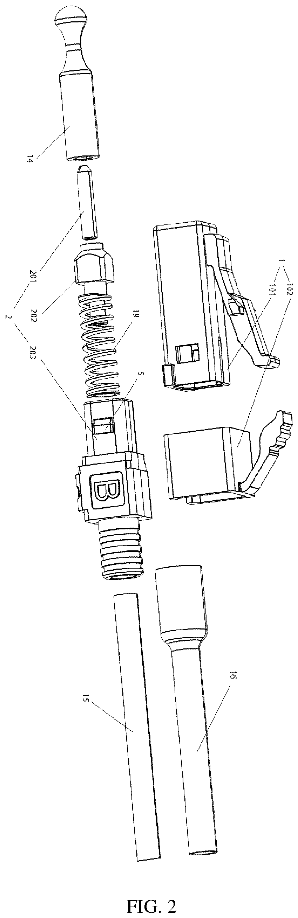

Referring to FIG. 2 and FIG. 3, as a preferred embodiment of the present invention, the outer side of the ferrule 201 is sleeved with a dust cap 14, the first mounting hole 9 is internally provided with a tail sleeve 15. One end of the clamping member 203 is sleeved with the outer side of the tail sleeve 15 with a same stepped outer sleeve 16. The outer contour of the clamping member 203 on the right side of the fixing plane 7 is matched with the inner contour of the outer sleeve 16. The dust cap 14 on the outer side of the ferrule 201 can prevent dust from entering the ferrule 201 and affect a use of the optical fibers, and it can also protect the ferrule 201 and the optical fibers. The outer sleeve 16 is sleeved on the right side of the clamping member 203 and the outer contour of the tail sleeve 15, so that the tail sleeve 15 and the clamping member 203 can be fixed more firmly and not easily loosened.

Referring to FIG. 2 and FIGS. 5, as a preferred embodiment of the present invention, the tail handle 202 is divided into a tail handle head portion 17 and a tail handle tail portion 18. The tail handle tail portion 18 is sleeved with one end of a spring 19, and the other end of the spring 19 is located in the first mounting hole 9. The tail handle head portion 17 is connected to the ferrule 201. The central part of the front frame sleeve 101 is provided with a second mounting hole 20 that matches with the ferrule 201, the tail handle head portion 17 and the outer contour of the left end of the clamping member 203. The cross section of the tail handle head portion 17 is quadrilateral, which reduces a backward rotation angle of the compressed spring 19 when the ferrule assembly 2 is docked with the front frame sleeve 101, which improves an accuracy of docking and a stability of repeated insertion and removal. The spring 19 plays a buffering role, and the second mounting hole 20 is used to mount the tail handle 202 and the clamping member 203, which plays a fixing role.

Referring to FIG. 2, as a preferred embodiment of the present invention, ends of the tail handle tail portion 18 and the tail sleeve 15 are connected by compressing the spring 19. The tail handle tail portion 18 and the tail sleeve 15 will be damaged due to the excessively compressed during the assembly process, so the spring 19 acts as a buffer.

The beneficial effects of the present invention are as follows.
(1) The clamping member 203 is fastened by mutually fastening the fastening slots 3 and the fastening members 4 on the first clamping member 2031 and the second clamping member 2032, so that the clamping member 203 is integrated, and the tail sleeve 15 provided in the first mounting hole 9 can be fixed. Therefore, when assembling the ferrule assembly 2, the present invention will result in a use of fewer accessories, easier assembly, and stronger and more stable assembly of parts, and the optical fiber can be installed by blowing to reduce the pollution to the optical fiber in the assembly process.
(2) In specific use of the present invention, the fasteners 5 on the first clamping member 2031 and the second clamping member 2032 are sleeved on the bayonets 10 on the front frame sleeve 101 outside the clamping member 203, so that the front frame sleeve 101 and the clamping member 203 are mutually fixed. The U-shaped snap ring 12 and hooks 13 on the rear frame sleeve 102 are respectively clamped on the U-shaped arc surface 6 and the fixing plane 7 on the clamping member 203. The limiting blocks 11 on the front frame sleeve 101 play a role in limiting the position of the rear frame sleeve 102, so that the rear frame sleeve 102 is sleeved and fixed with the clamping member 203, which improves a degree of fastening of the fixing assembly. Compared with an existing fixing method for the frame sleeve 1, the front and rear frame sleeves 102 of the present invention are fixed by the clamping member 203, so that fixing assembly points are dispersed, and each point can also cooperate with each other, which improve firmness and stability of the assembly.

The above are only the preferred embodiments of the present invention. It should be pointed out that for those of ordinary skill in the art, without departing from the principle of the present invention, several improvements and modifications can be made within the protection scope of appended claims.

## Claims

1. A connector comprising a frame sleeve (1) and a ferrule assembly (2) fixed in the frame sleeve (1), wherein the frame sleeve (1) comprises a front frame sleeve (101) and a rear frame sleeve (102) connected with an end of the front frame sleeve (101), the ferrule assembly (2) comprises a ferrule (201), a hollow tail handle (202) and a clamping member (203), the connector further comprises a tail sleeve (15), which is connected with one end of the tail handle (202), the ferrule (201) and the tail sleeve (15) are both provided with optical fiber through holes,
and optical fibers are arranged in the optical fiber through holes through the tail sleeve (15), the tail handle (202) and the ferrule (201) by blowing, two ends of the tail handle (202) are respectively connected to the ferrule (201) and the clamping member (203), the clamping member (203) is formed by mutually fastening a first clamping member (2031) and a second clamping member (2032), a pair of fastening slots (3) and a pair of fastening members (4) are both provided on the mutually fastening surfaces of the first clamping member (2031) and the second clamping member (2032), the fastening slots (3) on the first clamping member (2031) are mutually matched with the fastening members (4) on the second clamping member (2032), and the fastening members (4) on the first clamping member (2031) are mutually matched with the fastening slots (3) on the second clamping member (2032), both a side of the first clamping member (2031) and a side of the second clamping member (2032) are provided with fasteners (5), the fasteners (5) is clamped into the bayonets (10) on the front frame sleeve (101), so that the front frame sleeve (101) and the clamping member (203) are fixed with each other, the middle section of an outer surface of the clamping member (203) is provided with a U-shaped arc surface (6) and a fixing plane (7);
wherein one end of an inner side of the rear frame sleeve (102) is provided with a U-shaped snap ring (12), and the other end is provided with a pair of oppositely arranged hooks (13), the U-shaped snap ring (12) and the hooks (13) on the rear frame sleeve (102) are respectively clamped on the U-shaped arc surface (6) and the fixing plane (7) on the clamping member (203), so that the rear frame sleeve (102) is sleeved and fixed with the clamping member (203).

2. The connector according to claim 1, wherein an outer contour of the clamping member (203) is provided with a disassembly groove (8), the disassembly groove (8) is arranged parallel to the fixing plane (7), the disassembly groove (8) is located between the fixing plane (7) and the U-shaped arc surface (6).

3. The connector according to claim 1, wherein the central part of the clamping member (203) is provided with a first mounting hole (9) extending through the clamping member (203), the fastening slots (3) and the fastening members (4) are parallel to each other and are respectively provided at each side edge of the first mounting hole (9).

4. The connector according to claim 1, wherein one end of the front frame sleeve (101) is provided with a pair of bayonets (10) arranged oppositely and adapted to the fasteners (5), surfaces of the same side of the front frame sleeve (101) and the bayonets (10) are provided with limiting blocks (11), a pair of the limiting blocks (11) is flush with the end of the front frame sleeve (101).

5. The connector according to claim 1, wherein the outer side of the ferrule (201) is sleeved with a dust cap (14), the first mounting hole (9) is internally provided with a tail sleeve (15), one end of the clamping member (203) is sleeved with the outer side of the tail sleeve (15) with a same stepped outer sleeve (16), the outer contour of the clamping member (203) on the right side of the fixing plane (7) is matched with the inner contour of the outer sleeve (16).

6. The connector according to claim 1, wherein the tail handle (202) is divided into a tail handle head portion (17) and a tail handle tail portion (18), the tail handle tail portion (18) is sleeved with one end of a spring (19), and the other end of the spring (19) is located in the first mounting hole (9).

7. The connector according to claim 6, wherein the tail handle head portion (17) is connected to the ferrule (201), and the central part of the front frame sleeve (101) is provided with a second mounting hole (20) matching the ferrule (201), the tail handle head portion (17) and the outer contour of the left end of the clamping member (203).

8. The connector according to claim 6, wherein ends of the tail handle tail portion (18) and the tail sleeve (15) are connected by compressing the spring (19).

## Patentansprüche

1. Verbinder, der eine Rahmenhülse (1) und eine in der Rahmenhülse (1) befestigte Hülsenanordnung (2) umfasst, wobei die Rahmenhülse (1) eine vordere Rahmenhülse (101) und eine hintere Rahmenhülse (102) umfasst, die mit einem Ende der vorderen Rahmenhülse (101) verbunden ist, die Hülsenanordnung (2) eine Hülse (201), einen hohlen Endschaft (202) und ein Klemmelement (203) umfasst; der Verbinder ferner eine Endhülse (15) umfasst, die mit einem Ende des Endschafts (202) verbunden ist, die Hülse (201) und die Endhülse (15) mit Durchgangslöchern für Lichtleiterfasern versehen sind, und Lichtleiterfasern in den Durchgangslöchern für Lichtleiterfasern durch die Endhülse (15), den Endschaft (202) und die Hülse (201) durch Blasen angeordnet sind, die zwei Enden des Endschafts (202) jeweils mit der Hülse (201) und dem Klemmelement (203) verbunden sind, das Klemmelement (203) durch gegenseitiges Befestigen des ersten Klemmelements (2031) und des zweiten Klemmelements (2032) gebildet ist, ein Paar Befestigungsschlitze (3) und ein Paar Befestigungselemente (4) beide an den gegenseitigen Befestigungsflächen des ersten Klemmelements (2031) und des zweiten Klemmelements (2032) versehen sind, die Befestigungsschlitze (3) am ersten Klemmelement (2031) mit den Befestigungselementen (4) am zweiten Klemmelement (2032) aufeinander abgestimmt sind, und die Befestigungselemente (4) auf dem ersten Klemmelement (2031) gegenseitig mit den Befestigungsschlitzen (3) auf dem zweiten Klemmelement (2032) aufeinander abgestimmt sind, sowohl eine Seite des ersten Klemmelements (2031) als auch eine Seite des zweiten Klemmelements (2032) mit Befestigungselementen (5) versehen sind, wobei die Befestigungselemente (5) in die Bajonette (10) an der vorderen Rahmenhülse (101) geklemmt sind, so dass die vordere Rahmenhülse (101) und das Klemmelement (203) aneinander befestigt sind, der mittlere Abschnitt der Außenfläche des Klemmelements (203) mit einer U-förmigen Bogenfläche (6) und einer Befestigungsebene (7) versehen ist;
wobei ein Ende der Innenseite der hinteren Rahmenhülse (102) mit einem U-förmigen Schnappring (12) versehen ist, und das andere Ende mit einem Paar gegenüberliegend angeordneter Haken (13) versehen ist, wobei der U-förmige Schnappring (12) und die Haken (13) an der hinteren Rahmenhülse (102) jeweils auf der U-förmigen Bogenfläche (6) und der Befestigungsebene (7) des Klemmelements (203) festgeklemmt sind, so dass die hintere Rahmenhülse (102) auf das Klemmelement (203) aufgeschoben und mit diesem fixiert ist.

2. Verbinder nach Anspruch 1, wobei die Außenkontur des Klemmelements (203) mit einer Demontagenut (8) versehen ist, wobei die Demontagenut (8) parallel zur Befestigungsebene (7) angeordnet ist, und wobei die Demontagenut (8) zwischen der Befestigungsebene (7) und der U-förmigen Bogenfläche (6) liegt.

3. Verbinder nach Anspruch 1, wobei der zentrale Teil des Klemmelements (203) mit einem ersten Befestigungsloch (9) versehen ist, das sich durch das Klemmelement (203) erstreckt; die Befestigungsschlitze (3) und die Befestigungselemente (4) parallel zueinander sind und jeweils an jeder Seitenkante des ersten Befestigungslochs (9) vorgesehen sind.

4. Verbinder nach Anspruch 1, wobei ein Ende der vorderen Rahmenhülse (101) mit einem Paar Bajonetten (10) versehen ist, die gegenüberliegend angeordnet und an die Befestigungselemente (5) angepasst sind, wobei die Oberflächen derselben Seite der vorderen Rahmenhülse (101) und der Bajonette (10) mit Begrenzungsblöcken (11) versehen sind, wobei ein Paar der Begrenzungsblöcke (11) bündig mit dem Ende der vorderen Rahmenhülse (101) ist.

5. Verbinder nach Anspruch 1, wobei die Außenseite der Hülse (201) mit einer Staubkappe (14) ummantelt ist, das erste Montageloch (9) innen mit einer Endhülse (15) versehen ist, ein Ende des Klemmelements (203) mit der Außenseite der Endhülse (15) mit der gleichen abgestuften Außenhülse (16) ummantelt ist, die Außenkontur des Klemmelements (203) auf der rechten Seite der Befestigungsebene (7) an die Innenkontur der Außenhülse (16) angepasst ist.

6. Verbinder nach Anspruch 1, wobei der Endschaft (202) in einen Endschaft-Frontabschnitt (17) und einen Endschaft-Endabschnitt (18) unterteilt ist, wobei der Endschaft-Endabschnitt (18) von einem Ende der Feder (19) ummantelt ist, und das andere Ende der Feder (19) sich in dem ersten Befestigungsloch (9) befindet.

7. Verbinder nach Anspruch 6, wobei der Endschaft-Frontabschnitt (17) mit der Hülse (201) verbunden ist und der zentrale Teil der vorderen Rahmenhülse (101) mit einem zweiten Montageloch (20) versehen ist, das zu der Hülse (201), dem Endschaft-Frontabschnitt (17) und der äußeren Kontur des linken Endes des Klemmelements (203) passt.

8. Verbinder nach Anspruch 6, wobei die Enden des Endschaft-Endabschnitts (18) und der Endhülse (15) durch eine vorgespannte Feder (19) verbunden sind.

## Revendications

1. Connecteur comprenant un manchon de cadre (1) et un ensemble virole (2) fixé dans le manchon de cadre (1), dans lequel le manchon de cadre (1) comprend un manchon de cadre avant (101) et un manchon de cadre arrière (102) relié à une extrémité du manchon de cadre avant (101), l'ensemble virole (2) comprend une virole (201), une poignée arrière creuse (202) et un élément de serrage (203), le connecteur comprend en outre un manchon arrière (15), qui est relié à une extrémité de la poignée arrière (202), la virole (201) et le manchon arrière (15),
sont tous deux pourvus de trous traversants pour fibres optiques, et des fibres optiques sont agencées dans les trous traversants pour fibres optiques à travers le manchon arrière (15), la poignée arrière (202) et la virole (201) par soufflage, deux extrémités de la poignée arrière (202) sont respectivement reliées à la virole (201) et à l'élément de serrage (203), l'élément de serrage (203) est formé par fixer mutuellement un premier élément de serrage (2031) et un second élément de serrage (2032), une paire de fentes de fixation (3) et une paire d'éléments de fixation (4) sont toutes deux prévues sur les surfaces de fixation mutuelle du premier élément de serrage (2031) et du second élément de serrage (2032), les fentes de fixation (3) sur le premier élément de serrage (2031) sont mutuellement appariés avec les éléments de fixation (4) sur le second élément de serrage (2032), et les éléments de fixation (4) sur le premier élément de serrage (2031) sont mutuellement appariés avec les fentes de fixation (3) sur le second élément de serrage (2032), à la fois un côté du premier élément de serrage (2031) et un côté du second élément de serrage (2032) sont pourvus d'attaches (5), les attaches (5) sont serrées dans les baïonnettes (10) sur le manchon de cadre avant (101),
de sorte que le manchon de cadre avant (101) et l'élément de serrage (203) sont fixés l'un à l'autre, la section médiane d'une surface extérieure de l'élément de serrage (203) est pourvue d'une surface arquée en forme de U (6) et d'un plan de fixation (7) ;
dans lequel une extrémité d'un côté intérieur du manchon de cadre arrière (102) est pourvue d'un anneau élastique en forme de U (12), et l'autre extrémité est pourvue d'une paire de crochets disposés de manière opposée (13), l'anneau élastique en forme de U (12) et les crochets (13) sur le manchon de cadre arrière (102) sont respectivement serrés sur la surface arquée en forme de U (6) et le plan de fixation (7) sur l'élément de serrage (203) , de sorte que le manchon de cadre arrière (102) est gainé et fixé avec l'élément de serrage (203).

2. Connecteur selon la revendication 1, dans laquelle un contour extérieur de l'élément de serrage (203) est pourvu d'une rainure de démontage (8), la rainure de démontage (8) est agencée parallèlement au plan de fixation (7), la rainure de démontage (8) est situé entre le plan de fixation (7) et la surface arquée en forme de U (6).

3. Connecteur selon la revendication 1, dans laquelle la partie centrale de l'élément de serrage (203) est pourvue d'un premier trou de montage (9) s'étendant à travers l'élément de serrage (203), les fentes de fixation (3) et les éléments de fixation (4) sont parallèles les uns aux autres et sont respectivement prévus sur chaque bord latéral du premier trou de montage (9).

4. Connecteur selon la revendication 1, dans laquelle une extrémité du manchon de cadre avant (101) est pourvue d'une paire de baïonnettes (10) disposées de manière opposée et adaptées aux attaches (5), les surfaces du même côté du manchon de cadre avant (101) et les baïonnettes (10) sont munies de blocs de limitation (11), une paire des blocs de limitation (11) est au niveau de l'extrémité du manchon de cadre avant (101).

5. Connecteur selon la revendication 1, dans laquelle le côté extérieur de la virole (201) est gainé d'un capuchon anti-poussière (14), le premier trou de montage (9) est pourvu à l'intérieur d'un manchon arrière (15), une extrémité de l'élément de serrage (203) est gainé avec le côté extérieur du manchon arrière (15) avec un même manchon extérieur étagé (16), le contour extérieur de l'élément de serrage (203) sur le côté droit du plan de fixation (7) est adapté avec le contour intérieur du manchon extérieur (16).

6. Connecteur selon la revendication 1, dans laquelle la poignée arrière (202) est divisée en une partie avant de poignée arrière (17) et une partie arrière de poignée arrière (18), la partie arrière de poignée arrière (18) est gainée avec une extrémité du ressort (19), et l'autre extrémité du ressort (19) est située dans le premier trou de montage (9).

7. Connecteur selon la revendication 6, dans laquelle la partie avant de poignée arrière (17) est reliée à la virole (201), et la partie centrale du manchon de cadre avant (101) est pourvue d'un second trou de montage (20) correspondant à la virole (201), la partie avant de poignée arrière (17) et le contour extérieur de l'extrémité gauche de l'élément de serrage (203).

8. Connecteur selon la revendication 6, dans laquelle les extrémités de la partie arrière de poignée arrière (18) et du manchon arrière (15) sont reliées en comprimant le ressort (19).
